# EUROPÄISCHE PATENTANMELDUNG

(11) **EP 4 765 594 A1**
(43) Veröffentlichungstag der Anmeldung: **24.06.2026**
(21) Anmeldenummer: 24220443.6
(22) Anmeldetag: 17.12.2024
(51) Int. Cl.: H02K 11/33, H02K 15/12, H02K 15/123

(54) **VERFAHREN ZUM VERGUSS VON LEISTUNGSELEKTRONIK**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Koch, Thomas, 90459 Nürnberg (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Die Erfindung betrifft ein Verfahren zum Verguss von Leistungselektronik (13), die wenigstens teilweise in ein Lagerschild (10) einer dynamoelektrischen Maschine (11) integriert ist, umfassend die folgenden Schritte:
- Positionieren mindestens eines Sperrelements (4, 6), insbesondere in Form einer Kappe (4) und/oder eines Rings (6), über der Leistungselektronik (13),
- Einbringen eines Vergussmaterials in einen durch das Sperrelement definierten Raum,
- Aushärten des Vergussmaterials.

## Beschreibung

Die Erfindung betrifft ein Verfahren zum Verguss von Leistungselektronik.

Antriebe, bei welchem Umrichter in einen Motorinnenraum integriert sind, sind vorteilhaft. Hierbei ist der Umrichter z.B. im Gehäuse in axialer Richtung hinter dem Stator mit Wicklung montiert oder im Lagerschild intergiert. Auch eine kombinierte Lösung, umfassend Gehäuse und Lagerschild ist denkbar.

Durch die (Teil-)Integration des Umrichters in das Lagerschild werden vorzugsweise die Elemente der Leistungselektronik des Umrichters direkt in bzw. an das Lagerschild im Innenraum des Motors montiert. Hierbei ist die Fixierung und die Abfuhr der Wärme, welche im Betrieb durch die Leistungselektronik entsteht, besonders wichtig für das Betriebsverhalten des gesamten Antriebs.

Die Leistungsteile können z. B. mechanisch an einer Innenseite des Lagerschilds radial fixiert werden. Allerdings besteht die Gefahr, dass sich die fixierten Elemente durch z.B. Vibrationen wieder lösen. Auch der Schutz gegen Umwelteinflüsse, z.B. Feuchtigkeit durch Kondenswasser, fehlt. Zudem ist die Wärmeabfuhr durch beispielsweise Wärmeleitpasten zwischen Leistungsteil und Montagegeometrie des Lagerschildes nachteilig.

Der Erfindung liegt die Aufgabe zugrunde, dies zu verbessern.

Die Lösung der Aufgabe gelingt durch Anspruch 1. Das erfindungsgemäße Verfahren zum Verguss von Leistungselektronik, die wenigstens teilweise in ein Lagerschild einer dynamoelektrischen Maschine integriert ist, umfasst die folgenden Schritte:
- Positionieren mindestens eines Sperrelements, insbesondere in Form einer Kappe und/oder eines Rings, über der Leistungselektronik,
- Einbringen eines Vergussmaterials in einen durch das Sperrelement definierten Raum,
- Aushärten des Vergussmaterials.

Die Lösung der Aufgabe gelingt ferner durch ein System zum Verguss von Leistungselektronik, die wenigstens teilweise in ein Lagerschild einer dynamoelektrischen Maschine integriert ist, zur Durchführung des Verfahrens.

Die Lösung der Aufgabe gelingt zudem durch ein Sperrelement, insbesondere ausgebildet als Kappe und/oder Ring, zur Begrenzung eines definierten Raums beim Verguss von Leistungselektronik, die wenigstens teilweise in ein Lagerschild einer dynamoelektrischen Maschine integriert ist.

Ferner gelingt die Lösung der Aufgabe durch ein Lagerschild mit wenigstens teilweise integrierter Leistungselektronik, vergossen nach einem derartigen Verfahren.

Die Lösung der Aufgabe gelingt zudem durch eine Verwendung eines Vergussmaterials zum wenigstens teilweisen Verguss eines Lagerschilds mit wenigstens teilweise integrierter Leistungselektronik.

Antriebe, bei welchen ein Umrichter, wobei der Umrichter Leistungselektronik umfasst, in einen Motorinnenraum integriert sind, sind vorteilhaft. Der Umrichter ist z.B. im Gehäuse in axialer Richtung hinter dem Stator mit Wicklung montiert oder im Lagerschild wenigstens teilweise intergiert.

Ein Vorteil gegenüber einer getrennten Aufstellung ist beispielsweise, dass keine externen Kabel bzw. Leitungen zwischen Umrichter und Motor vorhanden sind, somit ergibt sich eine einfachere Inbetriebnahme und geringere Wicklungsbeanspruchung.

Ein Vorteil gegenüber aufgesetzten Umrichtern ist eine Beibehaltung des Lichtraumprofils, daher ist ein leichteres Retrofit möglich.

Von Vorteil ist zudem eine gezielte Abstimmung der beiden Komponenten und ein optimiertes Betriebsverhalten.

Die Leistungselektronik ist vorteilhaft in und/oder an einer Innenseite des Lagerschilds mechanisch fixiert.

Das Sperrelement ist vorzugsweise als eine Kappe und/oder ein Ring ausgebildet. Auch andere Formen sind möglich.

Das Sperrelement kann aus Kunststoff, beispielsweise einem thermoplastischen und/oder duroplastischen Polymer, hergestellt sein. Auch Silikon und/oder Teflon sind möglich. Es sind zudem andere Materialien denkbar.

Das Sperrelement dient dazu, den zu vergießenden Raum zu begrenzen und nahezu völlig abzuschließen, wobei vorteilhaft eine kleine Öffnung für eine Dosierdüse vorgesehen ist.

Wenn das Sperrelement Kunststoff aufweist, beispielsweise ein thermoplastisches und/oder duroplastisches Polymer, kann es auch nach dem Verguss in der Maschine verbleiben.

Wenn das Sperrelement Silikon und/oder Teflon aufweist ist eine Entfernung des Elements nach dem Verguss bevorzugt.

Als Vergussmaterial wird vorzugsweise ein epoxidbasiertes Material verwendet, Insbesondere Epoxidharz weist eine gute Beständigkeit gegenüber hohen Temperaturen auf.

Somit ist eine gute thermische Stabilität gegeben.

Die Wärmeleitfähigkeit des Vergussmaterials liegt vorteilhafterweise im Bereich von wenigstens 1 W/mK und höchstens 8 W/mK. So gelingt die Wärmeabfuhr besonders gut.

Es kann sich um ein Ein-Komponenten-Harzsystem (1K) oder ein Zwei-Komponenten-Harzsystem (2K) handeln. Beide Varianten sind in sehr vielen Modifikationen verfügbar. Ein 1K-Material ist leicht zu verarbeiten, benötigt aber mehr Energie und Zeit für die Aushärtung. Ein 2K-Material ist in der Verarbeitung dagegen aufwendiger, da die Mischung unmittelbar mit der Dosierung erfolgen muss.

Insbesondere um die Verarbeitungseigenschaften zu verbessern, kann das Vergussmaterial mit Additiven thixotropiert sein. Bevorzugt eingesetzt wird hierbei hydrophile pyrogene Kieselsäure (z. B. Aerosil).

Vorteilhaft ist eine Ausführungsform, wonach das Vergussmaterial bei Umgebungstemperatur ausgehärtet wird und/oder durch Einbringen von Wärme ausgehärtet wird.

Eine thermische Aushärtung gelingt gut bei Temperaturen von wenigstens 100°C, besonders gut gelingt diese bei Temperaturen von wenigstens 120°C.

Zwischen 150 °C und 180°C, abhängig von den Materialeigenschaften bzw. den Empfehlungen des Herstellers in den Datenblättern, ist eine vorteilhafte maximale Temperatur zur Aushärtung.

Ebenso die Dauer. die kann von mehreren Stunden bis hin zu wenigen Minuten (bei 2K-Varianten) sein.

Auch eine Aushärtung bei Umgebungstemperatur, insbesondere wenigstens 15°C und höchstens 25°C, ist möglich. Hierfür ist vorteilhaft ein längerer Aushärtezeitraum vorzusehen, beispielsweise wenigstens 20 h und höchstens 25 h. Ca. ein Tag für die Aushärtung kann hierbei angesetzt werden.

Auch eine Aushärtung bei höheren Raumtemperaturen ist hier nicht nachteilig. Es sind z. B. auch 30°C möglich, dies würde den Härtevorgang beschleunigen.

Das Einbringen des Vergussmaterials erfolgt vorzugsweise durch eine Dosierdüse, wobei besonders vorteilhaft ein Druck von wenigstens zwei bar und höchstens zehn bar angewendet werden kann. Auch mehr als zehn bar sind möglich, beispielsweise 20 bar.

Durch das Einbringen des Materials mit Druck können auch kleine Spalte gefüllt und überall eine gute Wärmeanbindung realisiert werden. Der einstellbare Fülldruck kann auf die verwendete Vergussmasse mit ihrer entsprechenden Viskosität angepasst werden. Je höher die Viskosität, desto höher ist vorteilhaft der benötigte Druck. Dieses Verfahren ermöglicht den Einsatz von höherviskosen Vergussmassen, die nicht allein durch die Schwerkraft in die Spalte eindringen würden.

Der maximale Druck ist abhängig von der Abdichtung des Füllraums und der Viskosität.

Das erfindungsgemäße System umfasst die notwendigen Komponenten zur Durchführung des beschriebenen Verfahrens. Das Sperrelement, vorzugsweise ausgebildet als Kappe und/oder Ring, ist ein Bestandteil des Systems und dient zur präzisen Begrenzung des Vergussraums.

Die Erfindung ermöglicht einen effektiven und kontrollierten Verguss von in Lagerschilden integrierter Leistungselektronik, was zu einer verbesserten Wärmeableitung, einem erhöhten Schutz vor Umwelteinflüssen und einer gesteigerten Zuverlässigkeit der dynamoelektrischen Maschine führt.

Im Folgenden wird die Erfindung anhand der in den Figuren dargestellten Ausführungsbeispiele näher beschrieben und erläutert. Es zeigen:
- FIG 1: Verfahrensschritte des Verfahrens zum Verguss von Leistungselektronik,
- FIG 2: Fixierung der Leistungselektronik am Lagerschild,
- FIG 3: ein Sperrelement in Form einer Kappe,
- FIG 4: ein Sperrelement in Form eines Rings,
- FIG 5: eine Antriebseinheit.

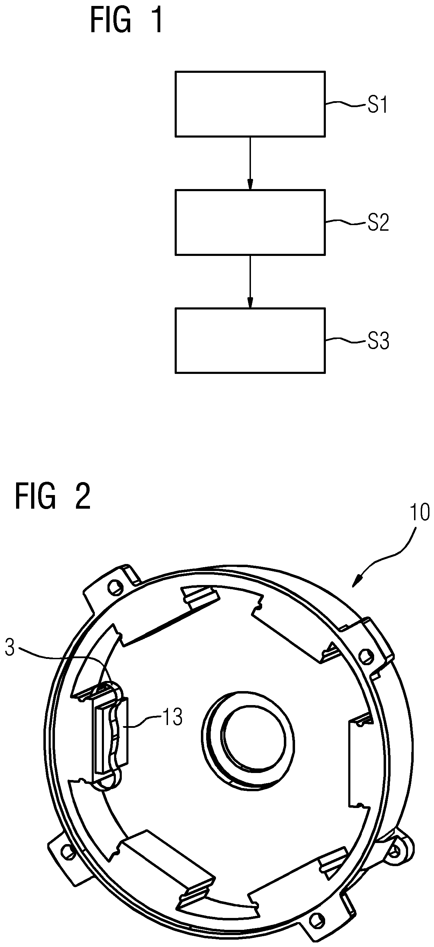

FIG 1 zeigt Verfahrensschritte des Verfahrens zum Verguss von Leistungselektronik, die wenigstens teilweise in ein Lagerschild einer dynamoelektrischen Maschine integriert ist. In einem Verfahrensschritt S1 erfolgt ein Positionieren mindestens eines Sperrelements, insbesondere in Form einer Kappe und/oder eines Rings, über der Leistungselektronik.

In einem Verfahrensschritt S2 erfolgt ein Einbringen eines Vergussmaterials in einen durch das Sperrelement definierten Raum.

In einem Verfahrensschritt S3 erfolgt ein Aushärten des Vergussmaterials.

Der Verguss der Leistungselektronik bei im Motorinnenraum integrierten Umrichter, bei welchen der Umrichter im Lagerschild integriert oder teilintegriert ist, ist wichtig, um Wärme abführen zu können und Schäden an der Leistungselektronik durch Vibration zu verhindern.

Im bzw.am Lagerschild eingebrachte Kunststoffkappen für die Bereiche der Leistungsteile oder ein vollumlaufender Kunststoffring sind hierbei von Vorteil. Beide Elemente werden beim beschriebenen Verguss vorteilhaft benötigt, um die radial angebrachte Elektronik im Lagerschild mit einem beispielsweise entsprechenden Harz zu vergießen.

Wie in FIG 2 beschrieben werden die Teile der Leistungselektronik auf die Innengeometrie im Lagerschild mechanisch fixiert bzw. am Lagerschild fixiert.

Um nun eine endgültige Fixierung, Wärmeabfuhr und Schutz gegen Umwelteinflüsse zu erhalten, werden die Bereiche mit einem wärmeleitfähigen Vergussharz umschlossen. Diese Harze sind z. B. auf Basis von Epoxid, 1K oder 2K, können aber auch aus alternativen Werkstoffen sein.

Die Wärmeleitfähigkeit derartiger Materialien bewegt sich vorteilhaft im Bereich von 1W/mK (z.B. MC336 von Elantas) bis hin zu 8W/mK.

Für den Verguss sind die beschriebenen Sperrelemente, auch Vergussformen genannt, von Vorteil, um nur die benötigten Bereiche zu füllen.

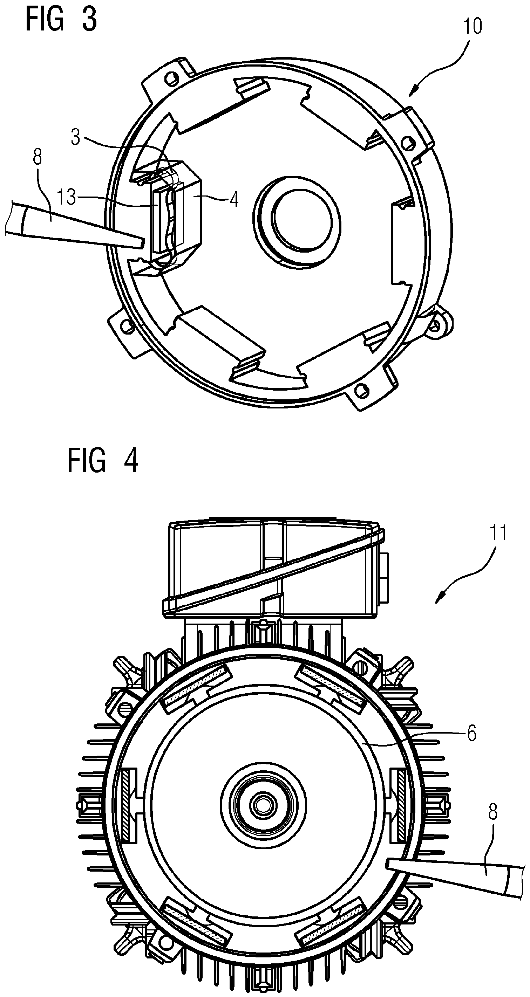

Dabei werden insbesondere für einen Teilverguss Kappen, beispielsweise Kunststoffkappen, über die fixierten Leistungsteile geschoben, siehe FIG 3. Die Geometrie im Lagerschild ist entsprechend hierfür vorgesehen.

Alternativ kann insbesondere bei einem Vollverguss aller Leistungsteile ein Ring als Vergussform in das Lagerschild gesteckt und fixiert werden, siehe FIG 4. Dieser Ring, insbesondere aus oder mit Kunststoff, sowie die Kunstoffkappen bleiben später vorteilhaft im Produkt.

Nun kann über eine Dosieranlage das Vergussmaterial in die zu vergießenden Bereiche appliziert werden. Der Verguss kann drucklos erfolgen. Dabei wird das Vergussmaterial in die zu vergießenden Bereiche dosiert, bis der zu vergießende Raum verfüllt ist.

Alternativ kann das Vergussmaterial auch mit Druck (vorteilhaft 2 bis 10 bar) in die Vergussbereiche appliziert werden. Hierfür muss das Sperrelement den Vergussraum vorteilhaft wenigstens im Wesentlichen komplett umschließen bzw. abschließen, wobei eine Öffnung für die Applikation, also für die Düse 8, benötigt wird.

Wird für diese Anwendung der Vergussring verwendet, muss dieser ebenfalls das Lagerschild stirnseitig radial abschließen. Optional kann die Scheibe auch so ausgeführt sein, dass über einen Verteilerkanal das Vergussmaterial von der Dosierposition aus in alle Bereiche verteilt wird.

Das Vergussmaterial ist vorteilhaft mit Additiven thixotropiert. Dadurch wird verhindert, dass das Harz durch etwaige Spalte zwischen Vergussring oder Kappe und Lagerschild austritt.

Alternativ zu den Kunststoffkappen für den Teilverguss oder einem Kunststoffring für einen vollflächigen Verguss kann auch ein Vergusswerkzeug verwendet werden. Dieser Ring, z.B. aus Silikon oder Teflon, wird für den Vergussprozess als Materialsperre in das Lagerschild gedrückt und nach erfolgter Aushärtung wieder entfernt.

Auch ist eine expandierende Werkzeuglösung (z.B. durch Druckluft ähnlich eines Gummischlauches oder mechanisch durch Lamellen oder Backen) hierbei denkbar.

Das Vergussmaterial wird vorteilhaft anschließend noch thermisch gehärtet. Hier sind Temperaturen größer 120°C für einige Stunden möglich. Alternativ können die Vergussmaterialien als zweikomponentige (2K) Varianten ausgeführt sein. In diesem Fall sind die gemischten Harzsysteme raumtemperaturhärtend in einem Zeitbereich von 24h. Eine thermische Aushärtung ist dann nicht mehr notwendig.

Die Vorteile des Vergusses sind insbesondere: Eine zusätzliche Fixierung der Leistungselektronik, Schutz gegen mechanische Einflüsse, z.B. Vibrationen, Beschädigung bei Montage, Schutz gegen Umwelteinflüsse, z.B. Feuchtigkeit und eine verbesserte Wärmeabfuhr der Leistungselektronik.

FIG 2 zeigt ein Lagerschild 10. Die Leistungselektronik 13 ist mechanisch fixiert. Ein Fixierungsmittel 3 hält diese an einer Innenseite des Lageschilds 10.

FIG 3 zeigt eine Ausführungsform des Sperrelements in Form einer Kappe 4. Ferner ist eine Dosierdüse 8 gezeigt, mittels welcher das Vergussmaterial eingebracht werden kann.

FIG 4 zeigt eine dynamoelektrische rotatorische Maschine 11 sowie ein Sperrelement in Form eines Rings 6. In dieser Ausführungsform wird der definierte Raum zum Verguss durch den Ring 6 begrenzt.

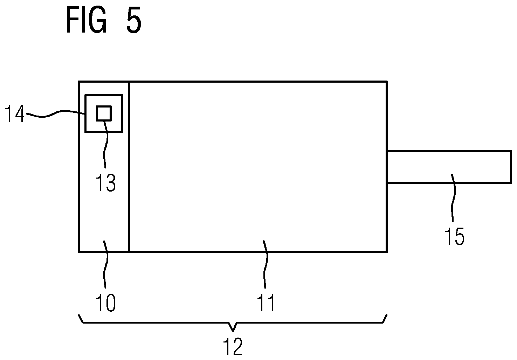

FIG 5 zeigt eine Antriebseinheit 12, aufweisend eine dynamoelektrische rotatorische Maschine 11 mit einem Lagerschild 10 sowie einer Welle 15.

Ein Umrichter 14 mit der Leistungselektronik 13, also wenigstens einem leistungselektronischen Element, ist wenigstens teilweise in das Lagerschild 10 integriert.

## Patentansprüche

1. Verfahren zum Verguss von Leistungselektronik (13), die wenigstens teilweise in ein Lagerschild (10) einer dynamoelektrischen Maschine (11) integriert ist, umfassend die folgenden Schritte:
- Positionieren mindestens eines Sperrelements (4, 6), insbesondere in Form einer Kappe (4) und/oder eines Rings (6), über der Leistungselektronik (13),
- Einbringen eines Vergussmaterials in einen durch das Sperrelement definierten Raum,
- Aushärten des Vergussmaterials.

2. Verfahren nach Anspruch 1, wobei das Sperrelement (4, 6) Kunststoff aufweist, beispielsweise ein thermoplastisches und/oder duroplastisches Polymer.

3. Verfahren nach Anspruch 1, wobei das Sperrelement (4, 6) Silikon und/oder Teflon aufweist.

4. Verfahren nach einem der vorhergehenden Ansprüche, wobei das Vergussmaterial epoxidbasiert ist.

5. Verfahren nach einem der vorhergehenden Ansprüche, wobei das Vergussmaterial eine Wärmeleitfähigkeit im Bereich von wenigstens 1 W/mK und höchstens 8 W/mK aufweist.

6. Verfahren nach einem der vorhergehenden Ansprüche, wobei das Vergussmaterial ein Ein-Komponenten-Harzsystem ist oder ein Zwei-Komponenten-Harzsystem ist.

7. Verfahren nach einem der vorhergehenden Ansprüche, wobei das Vergussmaterial mit Additiven thixotropiert ist.

8. Verfahren nach einem der vorhergehenden Ansprüche, wobei das Vergussmaterial bei Umgebungstemperatur ausgehärtet wird und/oder durch Einbringen von Wärme ausgehärtet wird.

9. Verfahren nach einem der vorhergehenden Ansprüche, wobei durch eine Dosierdüse (8) das Vergussmaterial eingebracht wird.

10. Verfahren nach einem der vorhergehenden Ansprüche, wobei das Vergussmaterial mit einem Druck von wenigstens zwei bar und höchstens zehn bar eingebracht wird.

11. Verfahren nach einem der vorhergehenden Ansprüche, wobei der zu vergießende Raum vom Sperrelement (4, 6) nahezu völlig abgeschlossen wird.

12. System zum Verguss von Leistungselektronik (13), die wenigstens teilweise in ein Lagerschild (10) einer dynamoelektrischen Maschine (11) integriert ist, zur Durchführung des Verfahrens nach einem der Ansprüche 1 bis 11.

13. Sperrelement (4, 6), insbesondere ausgebildet als Kappe (4) und/oder Ring (6), zur Begrenzung eines definierten Raums beim Verguss von Leistungselektronik (13), die wenigstens teilweise in ein Lagerschild (10) einer dynamoelektrischen Maschine (11) integriert ist.

14. Lagerschild (10) mit wenigstens teilweise integrierter Leistungselektronik (13), vergossen nach einem Verfahren nach einem der Ansprüche 1 bis 11.

15. Verwendung eines Vergussmaterials zum wenigstens teilweisen Verguss eines Lagerschilds (10) mit wenigstens teilweise integrierter Leistungselektronik (13).
